Europäisches Patentamt

European Patent Office

Office européen des brevets

(11) Veröffentlichungsnummer: **0 262 517**
B1

# (12) EUROPÄISCHE PATENTSCHRIFT

(45) Veröffentlichungstag der Patentschrift:
05.12.90

(51) Int. Cl.⁵: **F16M 7/00**

(21) Anmeldenummer: 87113601.6

(22) Anmeldetag: 17.09.87

(54) **Stahlverankerung.**

(30) Priorität: 26.09.86  CH 3875/86

(43) Veröffentlichungstag der Anmeldung:
06.04.88 Patentblatt 88/14

(45) Bekanntmachung des Hinweises auf die Patenterteilung:
05.12.90 Patentblatt 90/49

(84) Benannte Vertragsstaaten:
AT BE CH DE ES FR GB IT LI NL SE

(56) Entgegenhaltungen:
AT-B- 376 780
DE-A- 2 610 737
DE-A- 2 642 590
US-A- 2 952 946
US-A- 3 590 263
US-A- 4 008 926

(73) Patentinhaber: BBC Brown Boveri Aktiengesellschaft,
CH-5401 Baden(CH)

(72) Erfinder: Dömer, Wolfgang, Guggimoos 395,
CH-5425 Schneisingen(CH)
Erfinder: Stadelmann, Peter W., Leimbachstrasse 82,
CH-8041 Zürich(CH)

**Beschreibung**

Die Erfindung betrifft eine Stahlverankerung in einem Betonfundament mit einem in den Beton eingegossenen Eingusskasten, an dessen aus dem Beton herausragenden Ende eine Keilplatte in Sollhöhe eingeschweisst ist, wobei der Raum unterhalb der Keilplatte mit einem Vergussmaterial gefüllt ist.

Stand der Technik

Bisher war es üblich, die horizontalen Kräfte über Stahlträger in das Fundament einzuleiten, wozu die Stahlträger in der Regel nachträglich in entsprechende Aufnahmen im fertigen Betonfundament eingegossen wurden.

Eine derartige Verankerung der eingangs genannten Art ist bekannt beispielsweise aus der AT-B 376 780. Hier wird im fertigen Betonfundament in eine dafür vorgesehene Ausnehmung ein Lagertopf nachträglich einbetoniert. An seinem offenen Ende ist der Lagertopf mit einer Abstützplatte abgedeckt, die je nach Anwendungsfall über eine Montageschweissnaht mit dem Lagertopf verbunden ist zwecks Einhaltung der richtigen Montageposition. Über eine zentrale Öffnung in der Abstützplatte wird eine Lagerspindel in den vorgängig mit einem aushärtbaren Vergussmaterial gefüllten Lagertopf eingesetzt.

Diese Art der Verankerung bewirkt eine Schwächung des tragenden Querschnittes im Fundament, da die Bewehrung um das vorgesehene Eingussloch für den Lagerkasten herumgeführt werden muss.

Darstellung der Erfindung

Hier will die Erfindung Abhilfe schaffen. Ihr liegt die Aufgabe zugrunde, eine Stahlverankerung zu schaffen, bei welcher der Eingusskasten integraler Bestandteil des Fundamentes und somit für besonders grosse Lasten bestens geeignet ist.

Erfindungsgemäss wird diese Aufgabe dadurch gelöst, dass der Eingusskasten mit Bewehrungseisen versehen ist, dass das Vergussmaterial ein hochfester Fliessmörtel ist, der den Zwischenraum zwischen Keilplatte und Betonoberkante ausfüllt, und dass auf die Keilplatte ein in Längs- und Querrichtung auf Sollmass ausgerichteter Keil aufgeschweisst ist.

Der Vorteil der Erfindung ist unter anderm darin zu sehen, dass durch die vertikale Verschiebung der Keilplatte und die richtige Plazierung des Keiles auf der Keilplatte die Bautoleranzen kompensiert werden können.

Es ist zweckmässig, wenn der Eingusskasten mehreckig, vorzugsweise quadratisch gestaltet ist. Die flachen, geraden Wandungen können dadurch auf einfache Weise an der Schalung des Fundamentes befestigt werden.

Es empfiehlt sich, den Eingusskasten als Schweisskonstruktion auszuführen. Dadurch besteht die Möglichkeit, den aus einfachen Blechen bestehenden Kasten erst vor Ort herstellen zu können.

Vorzugsweise werden an mindestens einer Seite des mehreckigen Kastens schräge, unter 45° in der Horizontalen und in der Vertikalen verlaufende Speichen angebracht. Durch diese Anordnung geschieht die Krafteinleitung in den Beton gezielt in der Weise, dass die Betonoberfläche schnell verlassen wird und dort die örtlich zulässigen Spannungen auf keinen Fall überschritten werden.

Ein Verfahren zum Herstellen einer solchen Stahlverankerung sieht vor,
- dass ein geschweisster, mit Löchern für Bewehrungseisen versehener Eingusskasten in die Schalung des Fundamentes eingebracht und in die Bewehrung integriert wird;
- dass beim Giessen des Fundamentes eine Kopfpartie innerhalb und ausserhalb des Kastens ausgespart wird;
- dass eine Keilplatte nach richtiger Höheneinstellung in das offene Kastenende eingeschweisst wird;
- dass ein genau ausgerichteter Keil auf die Keilplatte aufgeschweisst wird;
- und dass die ursprünglich ausgesparte Kopfpartie innerhalb und ausserhalb des Kastens mit Fliessmörtel ausgefüllt wird.

Dieses Verfahren weist folgende Vorteile auf:
- Das Auspressen vom Spalt bzw. das Füllen der Kopfpartie mit hochfestem Fliessmörtel ergibt niedrige Randspannungen, weil die Kräfte auf eine grosse Fläche verteilt werden;
- im Vergleich zu den direkt eingegossenen Verankerungen entstehen hier keine Schrumpfprobleme;
- schliesslich wird eine eindeutige Trennung der Verantwortlichkeiten zwischen Bauunternehmer und Maschinenmonteur erreicht.

Gerade letzteres ist von nicht zu unterschätzender Bedeutung, wie in der oben erwähnten US-PS 3,590,263 zum dort zugrundeliegenden Stand der Technik ausgeführt ist.

Zwar ist es bereits aus der auch schon genannten DE-OS 26 42 590 bekannt, als Schlussoperation zwischen zwei Elemente schrumpfarmen Feinbeton einzugiessen. Indes handelt es sich dort nicht um die Verfestigung der Verankerung, sondern um das Auffüllen des Zwischenraumes zwischen Fundamentoberfläche und Bodenplatte des Lagergehäuses.

Des weiteren ist es aus der US-PS 4,008,926 bekannt, die Stahlverankerung für die Lagerung einer Turbomaschine mittels Stahlhaken in das Betonfundament zu vergiessen. Diese als breite Mulde ausgebildete Stahlverankerung übernimmt dort gleichzeitig die Funktion des Lagerbockes und der üblichen Bodenplatte; sie kann nur im weitesten Sinne mit vorliegender Stahlverankerung verglichen werden.

Kurze Beschreibung der Zeichnungen

In der Zeichnung ist ein Ausführungsbeispiel der Erfindung dargestellt. Es zeigen

Fig. 1 einen Längsschnitt durch die im Fundament eingegossene Stahlverakerung
Fig. 2 eine Draufsicht auf die Stahlverankerung ohne aufgesetzten Keil, und der besseren Übersichtlichkeit wegen ohne Schweissnähte.

Weg zur Ausführung der Erfindung

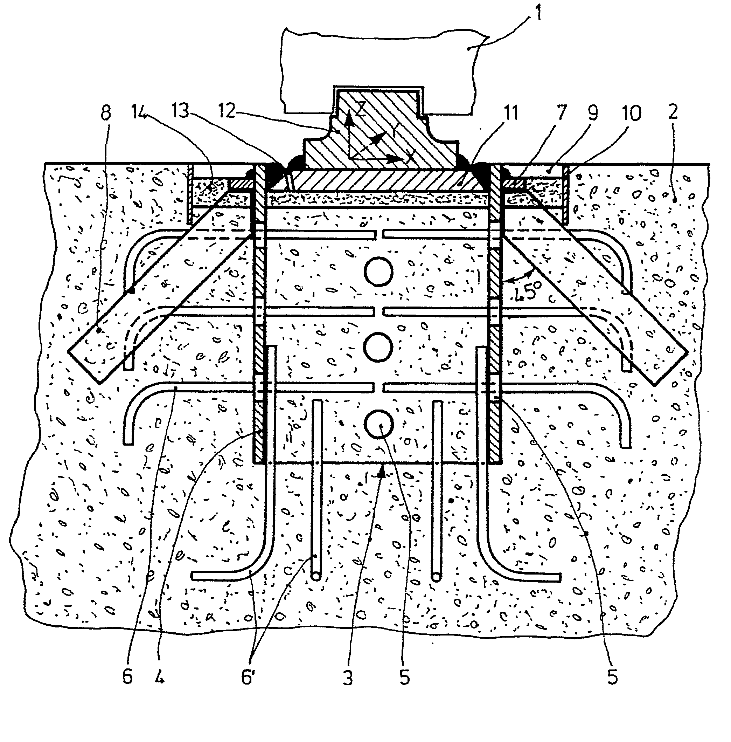

Bei dem in Fig. 1 mit 1 bezeichneten Maschinenteil kann es sich beispielsweise um das Lager einer Turbomaschine handeln. Unter Lager wird hier die Gesamtanordnung vom Lagerbock mit Lagerschalen und Lagergehäuse mit Bodenplatte verstanden. Erfindungsunwesentlich und deshalb auch nicht gezeigt ist die eigentliche feste Verbindung des Lagergehäuses mit dem Fundament 2, welche in der Regel über Ankerschrauben erfolgt.

Der Eingusskasten 3 der Stahlverankerung ist im vorliegenden Fall von quadratischer Grundform und besteht im wesentlichen aus vier zusammengeschweissten Blechplatten 4. Der Kasten wird vom Fundamenthersteller in die nicht gezeigte Schalung eingebracht und in die Bewehrung integriert. Hierzu sind die Platten 4 mit Löchern 5 versehen, durch welche die Bewehrungseisen 6 hindurchgeführt sind. Durch das untere, offene Ende des Kastens sind weitere, an den Blechplatten 4 angeheftete Bewehrungseisen 6' herausgeführt.

An zwei gegenüberliegenden Seiten des Kastens ist an dessen oberen Ende ein Flacheisen 7 rechtwinklig angeschweisst. Die Flacheisen erstrecken sich über die ganze Seitenlänge des Kastens. An diesen Eisen sowie an den entsprechenden Platten sind auf jeder Seite je zwei Speichen 8 angeschweisst. Bezogen auf die Plattenausrichtung verlaufen sie unter einem Winkel von 45° sowohl in der Horizontalen als auch in der Vertikalen.

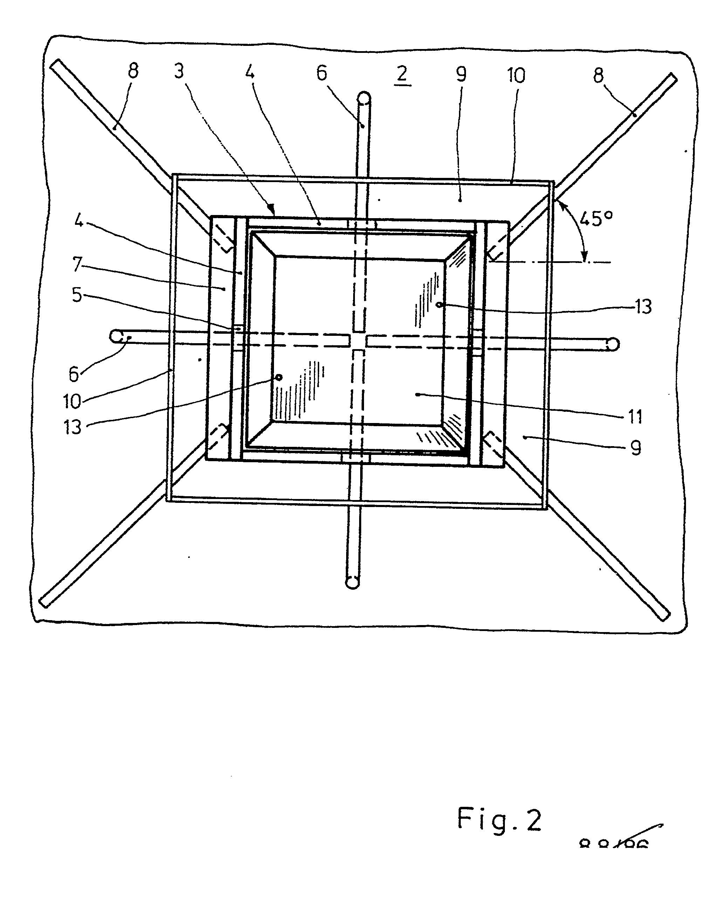

Sie bestehen aus einfachen Flachstählen. Aus Fig. 2 ist unschwer zu erkennen, dass auf diese Art eine gleichmässige Lastverteilung im Beton möglich ist. Es versteht sich, dass je nach Belastung und Kraftrichtung die Speichen gegebenenfalls nur auf einer Kastenseite angebracht werden müssen und dass auch die Speichenwinkel und -längen an die jeweiligen Verhältnisse angepasst werden können.

In dieser Form kann nun das Fundament hergestellt werden. Die bei Maschinenfundamenten üblichen Eingusstoleranzen für den Kasten im Betrag von ± 20 mm in der Höhe (Z-Richtung), der Länge (X-Richtung) und der Breite (Y-Richtung) können dabei ohne weiteres akzeptiert werden. Beim Giessen wird um den Kasten herum eine Kopfpartie 9 ausgespart. Hierzu ist im vorgesehenen Abstand ein Rahmen 10 aus Flacheisen angeordnet, welcher als Schalung zum Gegenbetonieren dient.

Auf die Betonoberfläche wird innerhalb des Kastens mittels nicht dargestellten Einstellschrauben eine Keilplatte 11 auf die richtige Höhe (Z-Richtung) eingestellt. Die Keilplatte wird an die Innenseiten der vier Blechplatten 4 eingeschweist. Auf der Keilplatte wird ein Keil 12 in X- und Y-Richtung genau ausgerichtet und mit der Platte verschweist.

Ueber Bohrungen 13 wird anschliessend in den Zwischenraum zwischen Keilplattenunterseite und Betonoberfläche ein hochfester Fliessmörtel 14, beispielsweise ein Kunstharzmörtel eingepresst. Auch die Kopfpartie 9 wird bis zur Oberkante der Flacheisen 7 mit diesem Mörtel ausgefüllt. Man hat damit ein wirkungsvolles Mittel in der Hand, den konzentrierten Druck in den Beton einzuleiten. Dadurch, dass die Kraft über den Rahmen 10 auf eine grosse Fläche verteilt wird, kann die Kantendruckpressung im Beton erheblich reduziert werden.

**Patentansprüche**

1. Stahlverankerung in einem Betonfundament mit einem in den Beton eingegossenen Eingusskasten (3), an dessen aus dem Beton herausragenden Ende eine Keilplatte (11) in Sollhöhe eingeschweisst ist, wobei der Raum unterhalb der Keilplatte mit einem Vergussmaterial gefüllt ist, dadurch gekennzeichnet, dass der Eingusskasten (3) mit Bewehrungseisen (6, 6') versehen ist, dass das Vergussmaterial ein hochfester Fliessmörtel (14) ist, der den Zwischenraum zwischen Keilplatte (11) und Betonoberkante ausfüllt, und dass auf die Keilplatte ein in Längs- und Querrichtung auf Sollmass ausgerichteter Keil (12) aufgeschweisst ist.

2. Stahlverankerung nach Anspruch 1, dadurch gekennzeichnet, dass der Eingusskasten (3) mehreckig, vorzugsweise quadratisch ausgebildet ist.

3. Stahlverankerung nach Anspruch 1, dadurch gekennzeichnet, dass der Eingusskasten (3) eine Schweisskonstruktion ist.

4. Stahlverankerung nach Anspruch 2, dadurch gekennzeichnet, dass an mindestens einer Seite des Kastens (3) schräge, vorzugsweise unter 45° in der Horizontalen und in der Vertikalen verlaufende Speichen (8) angebracht sind.

5. Verfahren zur Herstellung einer Stahlverankerung nach Anspruch 1, dadurch gekennzeichnet,
- dass ein geschweisster, mit Löchern für Bewehrungseisen versehener Eingusskasten in die Schalung des Fundamentes eingebracht und in die Bewehrung integriert wird;
- dass beim Giessen des Fundamentes eine Kopfpartie innerhalb und ausserhalb des Kastens ausgespart wird;
- dass eine Keilplatte nach richtiger Höheneinstellung in das offene Kastenende eingeschweisst wird;
- dass ein genau ausgerichteter Keil auf die Keilplatte aufgeschweisst wird;
- und dass die ursprünglich ausgesparte Kopfpartie innerhalb und auserhalb des Kastens mit Fliessmörtel ausgefüllt wird.

**Claims**

1. Steel anchorage in a concrete foundation having a cast-in box (3) cast into the concrete and onto whose end projecting from the concrete a wedge plate (11) is welded at the specified height, the space below the wedge plate being filled with a sealing material, characterized in that the cast-in box (3) is provided with reinforcing steel bars (6, 6'), in that the sealing material is a high-strength quick-running mortar (14) which fills in the space between wedge plate (11) and upper edge of the concrete, and in that a wedge (12) which has been aligned for the specified mass in the longitudinal and transverse direction is welded onto the wedge plate.

2. Steel anchorage according to Claim 1, characterized in that the cast-in box (3) is designed as a polygon, preferably as a square.

3. Steel anchorage according to Claim 1, characterized in that the cast-in box (3) is a welded construction.

4. Steel anchorage according to Claim 2, characterized in that oblique spokes (8), preferably extending at 45° to the horizontal and, to the vertical, are attached to at least one side of the box (3).

5. Method for producing a steel anchorage according to Claim 1, characterized in that

     — a welded cast-in box, provided with holes for reinforcing steel bars, is inserted into the formwork of the foundation and integrated into the reinforcement;

     — a head part is left open inside and outside the box when the foundation is cast;

     — a wedge plate is welded into the open box end after correct height adjustment;

     — an accurately aligned wedge is welded onto the wedge plate;

     — and the head part originally left open inside and outside the box is filled in with quick-running mortar.

## Revendications

1. Ancrage d'acier dans une fondation en béton, avec un caisson noyé (3), scellé dans le béton, avec une extrémité sortant du béton à laquelle une plaque de clavette (11) est soudée à la hauteur requise, le volume situé sous la plaque de clavette étant rempli avec un matériau de scellement, caractérisé en ce que le caisson noyé (3) est pourvu de fers d'armature (6, 6'), en ce que le matériau de scellement est un mortier fluide à haute résistance (14) qui remplit entièrement le volume compris entre la plaque de clavette (11) et la face supérieure du béton, et en ce qu'une clavette (12) orientée dans la mesure requise en directions longitudinale et transversale, est soudée sur la plaque de clavette.

2. Ancrage d'acier suivant la revendication 1, caractérisé en ce que le caisson noyé (3) est polygonal, de préférence carré.

3. Ancrage d'acier suivant la revendication 1, caractérisé en ce que le caisson noyé (3) est une structure soudée.

4. Ancrage d'acier suivant la revendication 2, caractérisé en ce qu'à au moins un côté du caisson (3) sont fixés des rayons (8) obliques, inclinés à 45° sur l'horizontale et sur la verticale.

5. Procédé de fabrication d'un ancrage d'acier suivant la revendication 1, caractérisé en ce que:

     — un caisson noyé, soudé, pourvu de trous pour des fers d'armature, est placé dans le coffrage de la fondation et est intégré dans le ferraillage;

     — lors de la coulée de la fondation, on dégage une partie de tête à l'intérieur et à l'extérieur du caisson;

     — une plaque de clavette est soudée dans l'extrémité ouverte du caisson, après un réglage correct de la hauteur;

     — une clavette orientée avec précision est soudée sur la plaque de clavette;

     — et la partie de tête initialement dégagée à l'intérieur et à l'extérieur du caisson est remplie de mortier fluide.

Fig. 2